Europäisches Patentamt

European Patent Office

Office européen des brevets

(19)

(11) Numéro de publication : **0 519 824 A1**

# (12) DEMANDE DE BREVET EUROPEEN

(21) Numéro de dépôt : **92401698.3**

(22) Date de dépôt : **18.06.92**

(51) Int. Cl.[5] : **C10G 35/16, B01J 19/08, B01J 37/24**

(30) Priorité : **19.06.91 FR 9107748**
**19.06.91 FR 9107749**

(43) Date de publication de la demande :
**23.12.92 Bulletin 92/52**

(84) Etats contractants désignés :
**DE GB**

(71) Demandeur : **Roussy, Georges**
**17 rue Ernest Renan**
**F-54520 Laxou (FR)**

(71) Demandeur : **Maire, Gilbert**
**28 rue Kellermann**
**F-67500 Haguenau (FR)**

(72) Inventeur : **Roussy, Georges**
**17 rue Ernest Renan**
**F-54520 Laxou (FR)**
Inventeur : **Maire, Gilbert**
**28 rue Kellermann**
**F-67500 Haguenau (FR)**

(74) Mandataire : **Ahner, Francis**
**CABINET REGIMBEAU, 26, avenue Kléber**
**F-75116 Paris (FR)**

(54) **Procédé catalytique micro-onde de réformage des hydrocarbures.**

(57)    La présente invention concerne un procédé catalytique de réformage des hydrocarbures, utilisant des catalyseurs métalliques déposés sur un support d'oxydes minéraux présentant une sélectivité améliorée du produit de réformage par rapport au produit de craquage, caractérisé en ce que le catalyseur est soumis avant et/ou pendant la réaction catalytique à un champ électromagnétique microonde ou haute fréquence, permanent ou intense, qui le maintient à une température constante d'au moins 200°C.

EP 0 519 824 A1

Les réactions catalytiques des hydrocarbures qui ont lieu sur des catalyseurs avec les métaux de transition sont très variées et des progrès considérables ont été faits depuis 50 ans, tant au niveau de la compréhension des mécanismes des réactions que de la préparation des catalyseurs et de leur mise en oeuvre. On sait couper les liaisons carbone-carbone des molécules d'hydrocarbures en présence d'hydrogène, (craquage). On sait les oxyder complètement ou partiellement ; on sait les assembler ou accroître la longueur de la chaine des carbones. Les recettes de la chimie catalytique des hydrocarbures sont précises si on met à part le réformage qui reste une transformation plus délicate. Le réformage consiste à réarranger le squelette des atomes de carbone d'une molécule d'hydrocarbure sans modifier le nombre d'atomes de carbone du produit.

Il est connu que pour fabriquer des catalyseurs de réformage, on part d'un support convenable, on l'imprègne par exemple d'acide chloroplatinique en solution asqueuse ($H_2PtCl_6H_2O$), on sèche le sel dans une étuve et on le réduit en procédant, si besoin est, à une oxydation préalable.

On connaît de nombreuses variantes de cette recette (voir le chapitre 4, écrit par K. Foger dans le livre de Science et Technology, édité par J.R. Anderson et M. Boudart). Certaines précautions sont à prendre pour que l'étape de réduction conduise à une dispersion importante de la phase métallique sur la surface du support ; par exemple, l'étape de réduction peut être précédée par une étape d'oxydation sous flux d'oxygène ou d'air. La dispersion des particules, observée par microscopie électronique, peut comprendre des particules dont la taille varie entre 5 et 500Ä. elle peut être homogène, non homogène ou multimodale. On sait, par exemple, que la sélectivité des réactions de réarrangement de squelette des hydrocarbures dépend fortement de l'homogénéité de la dispersion. En général, on cherche à ce que la dispersion soit homogène et corresponde à des particules de très petites tailles.

Les catalyseurs métalliques interviennent dans de nombreux procédés, le plus souvent sous forme dispersés et supportés sur des oxydes. Selon la méthode de préparation des oxydes et surtout la façon dont les métaux actifs sont dispersés, on obtient des catalyseurs dont les propriétés catalistiques sont très variables tant du point de vue de l'activité du catalyseur que de sa sélectivité. L'activité du catalyseur mesure le taux d'avancement de la réaction, c'est-à-dire la quantité de produit ayant réagi dans des conditions normalisées ; la sélectivité mesure l'aptitude du catalyseur à obtenir sélectivement un produit de préférence à un autre produit, compte-tenu de la réaction choisie.

L'homme de l'art cherche à préparer les catalyseurs les plus actifs et les plus sélectifs possibles.

De très nombreuses méthodes de préparation des catalyseurs ont déjà été proposées. Pour les catalyseurs métalliques déposés sur les oxydes, qui sont les plus courants, on imprègne l'oxyde avec une solution d'un sel métallique, que l'on sèche et que l'on calcine ; on peut réduire ou oxyder selon les recettes le dépôt et activer le catalyseur en lui faisant subir un traitement thermique final dans des conditions bien définies. La caractérisation physique des catalyseurs est importante et de nombreuses méthodes sont utilisées pour mesurer la porosité, la dispersion du métal ou des métaux sur la surface et leur proportion. En général, on mesure la taille des particules et leur distribution. En dépit de la précision des méthodes utilisées, notamment de la microscopie électronique, les informations de structure ne suffisent pas encore à caractériser complètement les catalyseurs que l'on sait faire, ni prévoir les propriétés catalistiques d'un catalyseur à partir de sa structure, ni préparer à la demande un catalyseur dont la structure est désirée.

C'est le cas notamment des catalyseurs des réactions de réformage des hexanes. Les plus performants connus actuellement sont les catalyseurs au platine, déposé sur alumine, contenant seulement 0,2% de platine. La sélectivité en molécules n'excède cependant pas 60% quels que soient les traitements du catalyseur.

On rappelle que la sélectivité en réformage se mesure en effectuant une réaction type de réformage, par exemple, du méthyl-2-pentane. Les conditions expérimentales, au laboratoire, sont d'utiliser un four classique, une masse de catalyseur d'environ 200 milligrammes, un flux d'hydrogène de 30 $cm^3$ par minute et un rapport pression partielle d'hydrocarbure de 100, à pression totale à la pression atmosphèrique. La température de la réaction est de 250°C.

Dans ces conditions types, on mesure par chromatographie en phase gazeuse les abondances des produits formés et présents dans le flux d'hydrogène à la sortie du réacteur. Il est courant de trouver que pour un taux d'avancement de la réaction de 20% par exemple, on forme des produits de réformage : méthyl-3-pentane, n-hexane, méthylcyclopentane et parfois des traces de molécules cycliques du type cyclohexane et benzène.

Au total, les produits de craquage représentent couramment 50% de l'ensemble des produits formés, ce qui conduit globalement à une sélectivité en molécules réformées Si de 50%.

Il est à noter que l'on ne sait pas accroître de façon significative la sélectivité de réformage, par exemple d'un catalyseur au platine déposé sur alumine, et que les meilleurs d'entre eux ont une sélectivité de 60% lorsque la quantité de métal est d'environ 0,2%. On n'accroît pas significativement Si, même si on règle différemment la température des réactions ou si on modifie les recettes suivies pour la fabrication des catalyseurs en changeant le sel de départ, en ajoutant des ions compétiteurs, en modifiant les différentes températures des étapes de traitement, en modifiant la géométrie des réacteurs.

La présente invention concerne donc un procédé catalytique de réformage des hydrocarbures, utilisant des catalyseurs métalliques déposé sur un support d'oxydes minéraux, présentant une sélectivité améliorée du produit de réformage par rapport au produit de craquage.

Le procédé selon l'invention est caractérisé en ce que le catalyseur est soumis avant et/ou pendant la réaction catalytique à un champ électromagnétique microonde à haute fréquence, permanent ou intense, qui le maintient à une température constante d'au moins 200°C.

D'une manière générale, le catalyseur est maintenu à une température comprise entre 200°C et 400°C, de préférence 300°C et 350°C.

Le catalyseur métallique employé dans le procédé selon l'invention est généralement un métal du groupe VIII, de préférence le platine.

Il peut également être un alliage bimétallique des groupes VA, VIA, VIIA et VIIIA.

Selon un autre mode de réalisation du procédé de la présente invention, le catalyseur peut être dopé aux lanthanides et/ou aux actinides.

Pour support d'oxydes minéraux, on emploie de préférence une alumine, une silice, une zéolithe naturelle, une zéolithe synthétique, une argile, un oxyde de titane, un oxyde de lanthanides ou un oxyde d'acitinides.

La fréquence du champ électromagnétique microonde ou haute fréquence employé dans le procédé selon la présente invention est d'une manière préférentielle une fréquence comprise entre 13 et 2450 $MH_z$.

Les fréquences sont généralement choisies parmi la bande ISM, réservée aux applications industrielles, scientifiques et médicales, telles que définies par le Comité Consultatif International des Radiocommunications (C.C.I.R.) et le Bureau Internantional d'Enregistrement des Fréquences (B.I.E.F.).

Toutefois, le choix d'une fréquence particulière parmi la bande ISM en raison d'une réglementation locale, ne saurait avoir d'influence sur les caractéristiques techniques du procédé selon la présente invention.

Il faut noter qu'en suivant ce procédé, on modifie de façon permanente la structure géométrique de la dispersion du métal et la surface métallique sur le catalyseur et que l'on harmonise la taille des particules de façon significative. Dans cet ordre d'idée, on peut donc caractériser l'effet du champ électromagnétique par l'obtention de particules métalliques de tailles très constantes et généralement très petites. Ceci explique qu'on a alors un catalyseur performant en activité et sélectivité pour la réaction catalytique.

La présente invention concerne donc également un procédé de préparation d'un catalyseur métallique présentant une sélectivité améliorée du produit de réformage par rapport au produit de craquage, par imprégnation d'un support d'oxyde avec une solution d'un sel métallique, par séchage, calcination, réduction, ou par l'une de ces opérations, le catalyseur étant activé en le soumettant à un champ électromagnétique microonde ou haute fréquence, intense, capable de le porter à une température élevée d'au moins 200°C, et de la maintenir à cette température pendant au moins 5 minutes sous courant d'hydrogène.

Il est évident à l'homme de l'art que l'invention s'applique aussi à la fabrication des catalyseurs métalliques utilisés pour toutes les autres réactions qui ont lieu sélectivement sur les mêmes sites. Citons entre autres les réactions d'hydrogénation des hydrocarbures insaturés, des molécules oxygénées, des aldéhydes des cétones et des molécules azotées. On ne sort pas non plus du domaine de l'invention en préparant comme il est précisé ci-dessus, des catalyseurs métalliques dispersés sur des oxydes lorsque ces catalyseurs sont utilisés pour oxyder les hydrocarbures et le monoxyde de carbone. On sait en effet que ces réactions s'effectuent sur les mêmes sites et que la sélectivité est également liée à la structure géométrique du métal ou des métaux déposé.

De même, on ne sort pas non plus du domaine de l'invention en préparant selon l'invention des catalyseurs métalliques déposés sur des supports d'oxydes pour la réduction des oxdes d'azote et de soufre dont l'élimination est particulièrement recherché pour les problèmes d'environnement et de dépollution.

Les exemples ci-après illustrent les procédés selon la présente invention, sans toutefois chercher à en limiter la portée.

## EXEMPLE I

Une quantité de 10g d'alumine de marque WOELM N. Akt I n° 2359 est placée dans un bécher dans lequel sont versés 20 cm³ d'une solution d'acide chloroplatinique contenant 2,10 g de platine. Après évaporation lente du liquide et séchage dans une étuve à 100°C pendant 24 heures, le précurseur du catalyseur subit un traitement classique de calcination sous air et de réduction sous hydrogène, ce qui conduit à un catalyseur dont la sélectivité est voisine de 50%. Lorsque l'on prend ce catalyseur et le soumet à un champ électromagnétique à 2.450 $MH_z$ en le plaçant dans un tube lui-même situé dans un guide RG 112 U standard, suffisant pour que le catalyseur chauffe jusqu'à 300°C pendant 15 minutes, alors la sélectivité est portée à 90%.

Il faut noter que la sélectivité en produits de réformage, dans ces conditions, est peu affectée par une variation de température de la réaction catalytique.

L'installation d'irradiation qui a servi à préparer le catalyseur peut être, par exemple, celle que la Société SAIREM commericialise sous le nom de diélecmètre ou peut être un four du commerce modifié pour que la température à laquelle le catalyseur est porté soit constante pendant une dizaine de minutes. Il y a lieu, au cours de l'irradiation, de contrôler le niveau de puissance délivré par le générateur pour que la réaction ne s'emballe pas.

## EXEMPLE 2

On prend le catalyseur tel qu'il a été préparé précédemment, après séchage à l'étuve, on le place sous hydrogène et on le soumet alors au champ électromagnétique à 2.450 MH$_z$ pendant 15 minutes à 350°C. Les résultats obtenus pour l'isomérisation du n-hexane sont présentés dans le tableau I ci-après. On obtient encore, comme précédemment, une valeur élevée de la sélectivité en produits de réformage (Si%), alors qu'elle est inférieure à 50% lorsque l'on emploie un chauffage classique.

## TABLEAU I

| | Irradiation microonde | | | | | Chauffage classique | | | |
|---|---|---|---|---|---|---|---|---|---|
| T exp (°C) | 250 | 255 | 260 | 265 | 270 | 260 | 270 | 280 | 290 |
| $\alpha$ (%) | 3,63 | 4,89 | 6,53 | 9,77 | 14,89 | 2,56 | 5,19 | 8,63 | 14,4 |
| $S_i$ (%) | 72 | 72 | 78,2 | 75,8 | 81,2 | 40,3 | 44,4 | 48,8 | 51 |
| $D_c$(6C1) % | 0,60 | 0,68 | 0,13 | 0,52 | 0,21 | 0 | 0 | 0 | 0 |
| $D_c$(3C2) % | 0 | 0,49 | 0 | 0,81 | 0,52 | 0 | 0 | 0,73 | 1,5 |
| $D_c$(2C3) % | 12,1 | 11,7 | 8,79 | 9,23 | 4,17 | 27,7 | 26,4 | 23,1 | 20,9 |
| $D_c$(C1+C5) % | 5,62 | 6,11 | 5,47 | 5,99 | 6,58 | 10,8 | 9,59 | 9,90 | 10,6 |
| $D_c$(C2+C4) % | 9,74 | 9,03 | 7,46 | 7,62 | 7,34 | 21,2 | 19,7 | 17,5 | 16,1 |
| $D_{c(NEOH)}$ % | 0 | 0 | 0 | 0 | 0 | 0 | 0 | 0 | 0 |
| $D_{c(M2P)}$ % | 23,6 | 26,7 | 32,1 | 33,3 | 40,8 | 10,3 | 15,7 | 21,6 | 25,5 |
| $D_{c(M3P)}$ % | 12,7 | 14,3 | 13,4 | 17,9 | 18,3 | 10,8 | 12 | 12,5 | 13,4 |
| $D_{c(MCP)}$ % | 32,9 | 26,5 | 25,1 | 17,6 | 13,7 | 19,2 | 15,8 | 13,4 | 10,2 |
| $D_{c(BENZ)}$ % | 0 | 1,27 | 2,71 | 3,37 | 4,91 | 0 | 0,40 | 0,81 | 1,50 |
| $D_{c(CycloHEX)}$ % | 2,78 | 3,18 | 4,87 | 3,68 | 3,54 | 0 | 0,50 | 0,49 | 0,43 |

avec $\alpha$ % (taux de conservation) $C_1$ (méthane), $C_2$ (éthane), $C_3$ (propane), $iC_4$ (isobutane), $n$-$C_4$ (n-butane), $iC_5$ (isopentane), $n$-$C_5$ (n-pentane), CP (cyclopentane), NEOH (néohexane), M2P (méthyl-2-pentane), M3P (méthyl-3-pentane), n-HEX (n-hexane), MCP (méthylcyclopentane), BENZ (benzène), CycloHEX (cyclohexane).

## EXEMPLE 3

On prend le catalyseur tel qu'il a été préparé précédemment, après séchage à l'étuve, et on le soumet au cham électromagnétique à 2.450 $MH_z$ sous courant d'hydrogène pendant 30 minutes.

Les résultats de l'isomérisation du méthyl-2-pentane à 260°C sont reportés dans le tableau II, ci-dessous pour des catalyseurs préparés à différentes températures de réduction sous microonde ($\theta\mu$).
La sélectivité Si est, indépendament de cette température $\theta\mu$, supérieure à 80%.

## TABLEAU II

| Température du traitement | $\theta\mu=$ 300°C | $\theta\mu=$ 350°C | $\theta\mu=$ 400°C |
|---|---|---|---|
| $\alpha\%$ | 16,2 | 10,5 | 5,9 |
| Si % | 80,3 | 88,4 | 85,3 |
| Dc(6C1) % | 0 | 0,4 | 0,1 |
| Dc(3C2) % | 0,1 | 0 | 0,1 |
| Dc(2C3) % | 3,2 | 2,7 | 3,1 |
| Dc(C1 + C5) % | 10,3 | 5,7 | 7,9 |
| Dc(C2 + C4) % | 6,2 | 2,8 | 3,7 |
| Dc(M3P) % | 28,2 | 33,3 | 31,4 |
| Dc(n-HEX) % | 41,7 | 40,3 | 32 |
| MCP % | 9,2 | 14,3 | 22 |
| Dc(BENZ) % | 0,7 | 0,2 | 0 |
| Dc(CycloHex) % | 0,5 | 0,2 | 0 |
| $\rho=$(iC4/n-C4) | 5 | 5 | 17 |
| $\rho''=$(n-C5/iC5) | 2,2 | 1,7 | 1,8 |
| M3P/n-HEX | 0,7 | 0,8 | 1 |

## Revendications

1. Procédé catalytique de réformage des hydrocarbures, utilisant des catalyseurs métalliques déposés sur un support d'oxydes minéraux présentant une sélectivité améliorée du produit de réformage par rapport au produit de craquage, caractérisé en ce que le catalyseur est soumis avant et/ou pendant la réaction catalytique à un champ électromagnétique microonde ou haute fréquence, permanent ou intense, qui le maintient à une température constante d'au moins 200°C.

2. Procédé selon la revendication 1, caractérisé en ce que le catalyseur est maintenu à une température comprise entre 200°C et 400°C, de préférence 300°C à 350°C.

3. Procédé selon l'une des revendication 1 ou 2, caractérisé en ce que le catalyseur est dilué dans une quantité de même oxyde ou d'oxyde différent du support dudit catalyseur et dont la proportion peut varier entre 10% et 300% en poids de la quantité initiale.

4. Procédé selon l'une des revendications 1 à 5, caractérisée en ce que le catalyseur métallique est un métal du groupe VIII, de préférence le platine.

5. Procédé selon l'une des revendications 1 à 3, caractérisé en ce que le catalyseur métallique est un alliage bimétallique des groupe VA, VIA, VIIA et VIIIA.

6. Procédé selon l'une des revendications 1 à 5, caractérisé en ce que le catalyseur est dopé aux lanthanides et/ou aux actinides.

7. Procédé selon l'une des revendications 1 à 7, caractérisé en ce que le support d'oxyde est une alumine, une silice, une zéolithe naturelle, une zéolithe synthétique, une argile, un oxyde de titane, un oxyde de lanthanides ou un oxyde d'actinides.

8. Procédé selon l'une des revendications 1 à 7, caractérisé en ce que le champ électromagnétique microonde ou haute fréquence a pour fréquence une fréquence comprise entre 13 et 2450 $MH_z$.

9. Procédé de préparation d'un catalyseur métallique présentant une sélectivité améliorée du produit de réformage par rapport au produit de craquage, par imprégnation d'un support d'oxyde avec une solution d'un sel métallique, par séchage, calcination, réduction, ou par l'une de ces opérations, caractérisé en ce qu'il est activé en le soumettant à un champ électromagnétique microonde ou haute fréquence, intense, capable de le porter à une température élevée d'au moins 200°C, et de la maintenir à cette température pendant au moins 5 minutes sous courant d'hydrogène.

Office européen
des brevets

RAPPORT DE RECHERCHE EUROPEENNE

Numero de la demande

EP    92 40 1698

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 279 722 (KIRKBRIDE) | 1,2,4,7,8 | C10G35/16 |
| Y |  | 3,5,6,9 | B01J19/08 |
|  | * colonne 4, ligne 44 - colonne 5, ligne 18; revendications 1,3,4 * |  | B01J37/24 |
| X | GB-A-663 914 (ANGLO-IRANIAN OIL) * page 4, ligne 1 - page 5, ligne 25; revendications 1-8 * | 1,2,7,8 |  |
| Y | US-A-3 789 020 (ESSO) * revendications 1-20 * | 3,5 |  |
| Y | US-A-3 436 335 (MOBIL OIL) * revendications 1-8 * | 6 |  |
| A | US-A-3 404 098 (DU PONT DE NEMOURS) |  |  |
| Y | US-A-4 574 038 (ALBERTA OIL SANDS) * revendications 1-5; exemple 1 * | 9 |  |
| A | GB-A-2 100 615 (NISSAN) |  | **DOMAINES TECHNIQUES RECHERCHES (Int. Cl.5)** |
| A | US-A-4 970 397 (MOBIL OIL) |  | C10G B01J |
| A | EP-A-0 321 298 (ESSO) |  |  |

Le présent rapport a été établi pour toutes les revendications

| Lieu de la recherche | Date d'achèvement de la recherche | Examinateur |
|---|---|---|
| LA HAYE | 27 AOUT 1992 | MICHIELS P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)